# EUROPEAN PATENT APPLICATION

(11) **EP 0 824 061 A2**
(43) Date of publication of application: **18.02.1998**
(21) Application number: 97500137.1
(22) Date of filing: 11.08.1997
(51) Int. Cl.: B29C 70/70, B29C 70/86, B29C 70/34

(54) **A procedure for manufacturing strength-giving panels**

(30) Priority: 13.08.1996 ES 9601801
(71) Applicant: IRAUSA INGENIERIA, S.A., E-09007 Burgos (ES)
(72) Inventor: Morales Gallo, Francisco, 09003-Burgos (ES)
(74) Representative: Urteaga Simarro, José Antonio

(57) **Abstract**

A procedure for manufacturing strength-giving panels, especially for the interior of vehicles, doors, ceilings, etc. A prior preparation is carried out of two porous mats or blankets (A, B), based on textile fibres and epoxy resin. The two mats are placed in mutual application and submitted to pressure and heat by means of a mould, with a filling (S) being arranged between the two mats that increases the thickness of the finished panel in determined areas that can absorb sufficient energy in the case of a lateral collision.

## Description

The invention relates to a procedure for manufacturing strength-giving lining panels, particularly, although not exclusively, applicable to the interior of vehicles, of the type which are made up starting from sheets or plates composed of regenerated textile fibres, totally defibred and bonded together in an overlapping or layering process by means of resin, partly polymerized.

Generally, as far as is known, there are panels for this application, based on several textile fibres such as cotton, wood, polyamides acrylics, etc., with these fibres being bonded together by means of resin, for later placement in ovens at some 100 degrees centigrade, approximately, to allow the resin to partly polymerize and manipulable sheets or plates of a certain consistency to be obtained.

Later, this material is used as raw material, on being transformed by thermoforming under pressure and heat, that finishes the polymerization of the resins and forms panels which are applicable, for example, to the internal lining of automobile vehicles, so that they contribute certain acoustic and impact resistance characteristics which are acceptable.

In panels of this type, the use of phenolic resins is very frequent. The disadvantage of these phenolic resins is that when the transformation of the mat is carried out, they generate emissions of formaldehyde, which is problematic for the health and safety of the workers. In the same way, when the panel is assembled, for example in the vehicle, it has been proved that high concentrations of this substance can cause irritations and even become cancerigenic.

It has been demonstrated that the reduction of the formaldehyde provides substantial improvements in tests on fogging (misting-up of windows) and at the same time prevents the unpleasant smell that its substance produced.

Moreover, the general resistance of these traditional panels, for example to collision, although acceptable, is capable of being improved.

Another object of the invention is to provide a procedure for forming panels for automobile vehicles that provides units without any emission whatsoever of noxious or dangerous substances.

Another object of the invention is to provide a procedure that produces panels with much higher acoustic and shock resistance characteristics than conventional panels.

In order to achieve these objectives, the invention starts with cellulosic fibres, textiles, for example cotton, in association with others such as polyamides, acetates, viscoses, acrylics, wools, etc., in which the cellulosic fibres enter in a proportion of approximately ≥ 70% and the other fibres in a portion of ≤ 30% . These fibres are bonded with an epoxy resin, with a content of between 20% and 40% ± 5% of the total, with the total of the fibres being between 60 and 80%.

This material which is so formed, with the resin distributed and bonded to it, is subjected to heat inside an oven, for example at 100 degrees centigrade, in order to produce the partial polymerization of the resin and create a sheet of a certain consistency, with a grammage of approximately 1,600 to 2,400 grams per square metre.

Starting from this material, the mat is subjected to a thermoforming operation with pressure and heat, so that panels, so that panels of complex shapes are produced, with a final average thickness of between 1.8 and 4 millimetres.

In this operation and in accordance with the invention, two mats of the appropriate thickness are used, between which, in previously selected places, at least one filling or infill is placed, in such a way that when the thermoforming takes place, at least one protuberance of a greater thickness than the average thickness of the panel is created, capable of being able to absorb sufficient energy in the case of a lateral collision from the exterior.

The shape and location of these filling portions will be as determined by the manufacturer, taking into account the area or areas of the panel that require it, which will not cause any problems in the preparation of the protuberances.

The materials used for the said fillings or infills can be of any kind, for example, metallic, aluminium, cardboard, foam products, injected plastics, etc. To this effect, materials such as polypropylene, polyurethane, polystyrene, polystyrene with phenilene polyoxide, etc., can be used.

In the same way, the intrinsic shaped characteristics of the filling materials can also be variable, in the shape of tubes, based on corrugated material, based on hexagonal cells, etc.

In the preferred form the protuberances on the panels will stand out from the hidden side of each one. However, there is no problem whatsoever to make the protuberances on the visible sides of the panels when necessary.

Within the scope of the invention, other types of fibres can also be used, such as wooden fibres, mixtures of cellulosic-textile fibres with plastic fibres, and even plastic materials, in which latter case the formation of the fillings and the preparation of the panel will be carried out by means of an injection procedure.

The panels produced in the way and with the characteristics described provide acoustic and resistance characteristics much higher than other conventional panels, as has been demonstrated.

The panels usually use regenerated materials, so that they are highly recyclable with regard to the conservation of the enviroment. At the same time, they are perfectly compatible with all the linings used in making panels for vehicles, for example for doors, i.e. they allow different PVC materials, TPO Polyolefines, etc., as well as textiles, and miscellaneous accessories, such as door recesses, armrests, pockets, etc.

All these and other details of the invention will be understood with greater clarity with reference to the accompanying sheet of drawings, in which the following are represented, with a non-restrictive nature.
- Figure 1 is an elevation of an vehicle internal lining panel, for example in a door.
- Figure 2 corresponds to the cross section along the line I-I shown in Figure 1.
- Figures 3 and 4 represent two solutions for the panel with regard to increasing its thickness.

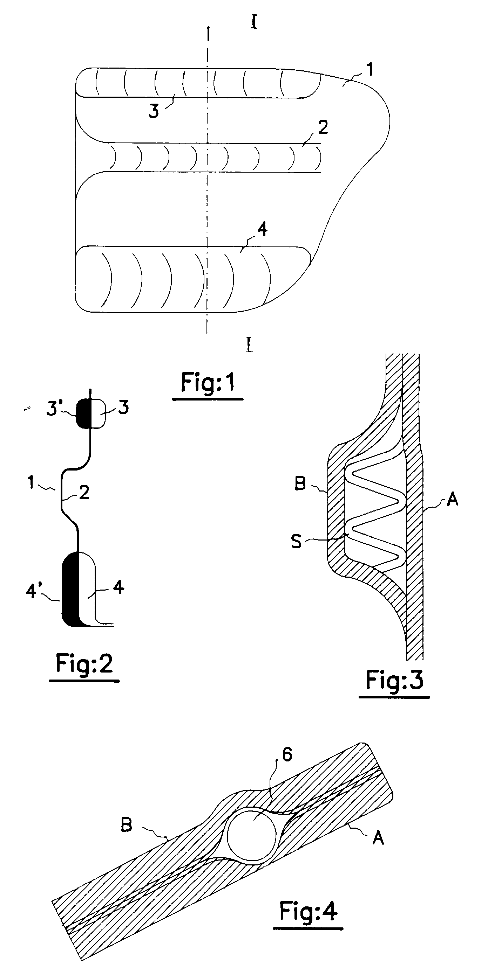

Looking now at Figure 1, we can appreciate the door panel (1) with the central portion (2) as an armrest, and the upper and lower portions (3,4), which correspond to the areas that the manufacturer has identified as areas needing greater protection against external impacts.

According to the cross section I-I in Figure 1, illustrated in Figure 2, we can observe the increased thickness of the upper and lower protection areas, shown either towards the hidden side (3,4) of the panel (1), or towards its visible side (3',4').

With reference to Figures 3 and 4, we will point out how the filling inserted between the two, layers, outer and inner (A,B), can adopt different constituent shapes, either in the form of corrugations, (5) or by way of a tube (6), among other possible formations.

It is important to point out, once having described the nature and advantages of this invention, its non-restrictive character, inasmuch as changes in the shape, materials or dimensions of it constituent parts will not in any way alter its essence, as long as they do not mean a substantial variation of the whole assembly.

## Claims

1. A procedure for manufacturing strengt-giving panels, composed of textile or other fibres, regenerated and totally defibred, bonded with resin in an overlapping or layering process, and partly polymerizer, until mats or blankets of porous material are formed, which will later be subjected to heat and pressure and to great pressing processes in order to adopt the shape determined, which is characterized in that the textile fibres enter in the constitution of the mats, with a proportion of between 60 and 80%, with a proportion of epoxy resin of between 40 and 20% ± 5%, with a grammage of between 1,600 and 2,400 grams per square metre, by bringing together two of these mats of porous material (A,B), formed in this way, with the arrangement between them of at least one filling (S), so that when the mats with the said filling included are submitted to heat and pressure, a panel with an average thickness of between 1.8 and 4 millimetres is produced, with at least one area of greater thickness, corresponding to the filling (S), with the external shapes of the said fillings, their position and number, being variable in terms of the areas of the panel to be protected.

2. A procedure for manufacturing strength-giving panels, in accordance with claim 1, characterized in that the filling in the panel increases the thickness towards its unseen side.

3. A procedure for manufacturing strength-giving panels, in accordance with claim 1, characterized in that the filling in the panel increases the thickness towards its visible side.

4. A procedure for manufacturing strength-giving panels, in accordance with claim 1, characterized in that the material used for the filling is metallic.

5. A procedure for manufacturing strength-giving panels, in accordance with claim 1, characterized in that the material used for the filling is cardboard.

6. A procedure for manufacturing strength-giving panels, in accordance with claim 1, characterized in that the material used for the filling is plastic.

7. A procedure for manufacturing strength-giving panels, in accordance with claim 1, characterized in that the material used for the filling is a foam product such as foamed or injected polypropylene, foamed polyurethane or similar.

8. A procedure for manufacturing strength-giving panels, in accordance with claims 1 and 7, characterized in that the filling material allows any kind of structure: corrugated, tubular, granulated or compact.

9. A proceure for manufacturing strength-giving panels, in accordance with claim 1, characterized in that the fibres used for making the porous mats are wooden.

10. A procedure for manufacturing strength-giving panels, in accordance with claim 1, characterized in that the fibres used for making the porous mats are a mixture of wooden and plastic fibres.

11. A procedure for manufacturing strength-giving panels, in accordance with claim 1, characterized in that the fibres used for making the porous mats are plastic, in which case the panel is manufactured by injection,

12. A procedure for manufacturing strength-giving panels, in accordance with claim 1, characterized in that the resin applied for the assembly phenolic.
